# FASCICULE DE BREVET EUROPEEN

(11) **EP 2 834 426 B1**
(45) Date de publication et mention de la délivrance du brevet: **06.10.2021**
(21) Numéro de dépôt: 12723518.2
(22) Date de dépôt: 11.04.2012
(51) Int. Cl.: E04B 1/90, E04B 1/94, E04B 2/42, E04C 2/12, E04C 2/42, B32B 3/14, B32B 3/18, B32B 21/04, B32B 5/14, B32B 7/00

(54) **PANNEAU MULTI-PLIS AMÉLIORÉ**
VERBESSERTE MEHRLAGIGE PLATTE
IMPROVED MULTI-PLY PANEL

(30) Priorité: 04.04.2012 FR 1253080
(43) Date de publication de la demande: 11.02.2015
(73) Titulaire: Techniwood International, 54320 Maxéville (FR)
(72) Inventeur: BOURDON, Laurent, 74600 Seynod (FR); FAURE, Pascal, 73400 Ugine (FR); GOY, Didier, 74230 Manigod (FR); CHABRIER, Christian, 74230 La Balme De Thuy (FR)
(74) Mandataire: Rhein, Alain
(86) Numéro de dépôt international: PCT/FR2012/050781
(87) Numéro de publication internationale: WO 2013/150188

(56) Documents cités:
- DE-A1- 19 603 833
- DE-U1- 20 216 634
- FR-A1- 2 922 565
- "MATERIAUX D'ISOLATION THERMIQUE", , 31 juillet 2010 (2010-07-31), pages 1-21, XP55042106, Extrait de l'Internet: URL:http://app.bruxellesenvironnement.be/g uide_batiment_durable/(S(pnmngc452sate5455 zzfa3bv))/docs/MAT05_FR.pdf [extrait le 2012-10-24]
- None

## Description

La présente invention concerne la construction de bâtiments. Elle concerne plus particulièrement un panneau pour constituer un plancher ou un mur ou un rampant de toiture, ou alors pour constituer un complément d'un mur, par exemple pour en améliorer l'isolation thermique et/ou phonique, ou la résistance au feu.

De nombreux matériaux ont été proposés pour constituer des murs, ou compléments de murs, pour en améliorer l'isolation thermique et/ou phonique, ou sa résistance au feu. Avec l'entrée en vigueur de nouvelles normes RT 2012, RT 2020 à venir et labels, les exigences changent, et il est donc nécessaire de pouvoir proposer des qualités de murs ou compléments de murs différents. De plus, la qualité nécessaire n'est pas la même, s'agissant de murs intérieurs ou extérieurs, de plafond, de rampants de toiture, et selon le type de constructions les exigences changent également. Cela oblige le fournisseur de panneaux ou matériaux à prévoir une grande quantité de références, pour pouvoir faire face à tous les besoins.

La présente invention a pour but de pallier au moins en partie à ces inconvénients. A cet effet elle propose un panneau multi-plis pour la constitution ou le complément d'un mur, d'un plancher ou plafond, ou d'un rampant pour un bâtiment, constitué d'un empilement de plis dont au moins un est constitué de lames structurelles parallèles, de préférence en bois, et de lames de remplissage disposées entre les lames structurelles en un matériau différent que celui des lames structurelles, lesdits matériaux pouvant être sélectionnés pour leur isolation thermique ou acoustique, leur inertie thermique ou leur résistance au feu. Le panneau est particulier en ce qu'au moins une lame de remplissage est en un matériau isolant de conductivité thermique inférieure à 0,038 W/m.K., de préférence inférieur à 0,035 W/m.K. et en ce qu'il comprend des matériaux différents dans au moins deux plis.

Grâce à ces dispositions, on peut obtenir une pluralité de types de panneaux, avec des caractéristiques adaptées à chaque besoin, par une conception simple, et une efficacité renforcée, en particulier en terme d'isolation thermique.

Selon d'autres caractéristiques
- ledit matériau isolant peut être en laine de verre, laine de roche, ou polystyrène expansé blanc ou graphité, matériaux possédant de bonnes qualités d'isolation thermique,
- ledit panneau peut comprendre une lame en un matériau d'inertie présentant une inertie thermique supérieure à 1000 kJ/m³.K ; cette disposition permet de conférer une bonne inertie thermique audit panneau, refroidissant moins vite la nuit et / ou en hiver, et chauffant moins vite le jour et / ou en été, et ladite lame peut être disposée avantageusement du côté de la paroi plus proche de l'intérieur d'un bâtiment, donnant ainsi le maximum de confort aux usagers.
- ledit matériau peut être en bois, plâtre, ouate de cellulose, ou particules de bois, qui présentent une combinaison de chaleur spécifique et de masse volumique donnant une bonne inertie thermique,
- ledit panneau peut comprendre une lame de remplissage en un matériau isolant acoustique,
- ledit matériau isolant acoustique peut être en laine de roche ou fibres de bois, qui sont des matériaux bien adaptés à l'isolation acoustique,
- ledit panneau peut comprendre une lame en un matériau incombustible, conférant une bonne résistance au feu audit panneau,
- ledit matériau incombustible peut être en plâtre ou laine de roche, matériaux présentant une bonne résistance au feu ; on choisira celui des matériaux dont les autres caractéristiques correspondant le mieux à ce qui est recherché pour le panneau,
- ledit panneau peut comprendre un pli pour réseaux techniques, dans laquelle subsistent des espaces entre lames structurelles de sorte à permettre le passage de réseaux techniques, permettant ainsi de cacher lesdits réseaux techniques dans le panneau.

L'avantage de la présente invention est en particulier qu'elle permet de proposer des panneaux ayant les propriétés adaptées et améliorées pour une pluralité d'applications, à partir d'un petit nombre de composants élémentaires que sont les lames structurelles et les lames de remplissage, assemblées en plis et en galettes.

La présente invention sera mieux comprise à la lecture de la description détaillée qui suit faite en référence aux figures annexées dans lesquelles
- La figure 1 est une vue éclatée d'un treillis bois d'un panneau selon l'invention,
- La figure 2 est une vue en coupe du treillis bois assemblé de la fig. 1,
- La figure 3 est une vue éclatée d'un panneau partiel selon l'invention,
- La figure 4 est une vue de face d'un deuxième mode de réalisation d'un pli d'un panneau selon l'invention,
- La figure 5 est une vue de face d'un troisième mode de réalisation d'un pli d'un panneau selon l'invention.

Les panneaux sont composés d'une succession de plis 1, encore appelés couches, Chaque pli comprend des lames structurelles 2 et peut comprendre des lames de remplissage 3.

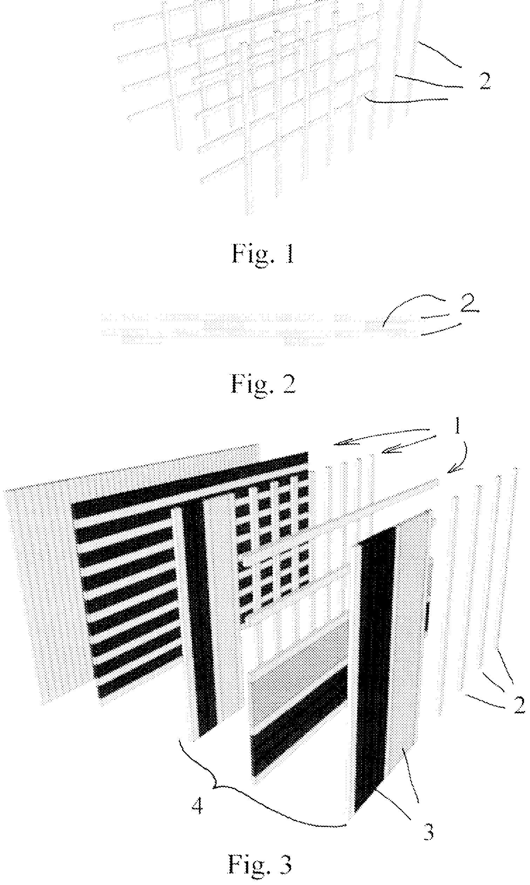

Les matériaux de remplissage sont généralement classées en matériaux mous, matériaux semi-rigides, constitués de matériaux mous associés à un renfort en papier Kraft ou fibre de verre, ces deux types de matériaux étant souvent manipulés sous forme de rouleaux et matériaux rigides qui se tiennent seuls et sont manipulés sous forme de plaques. Les lames de remplissage de la présente invention sont généralement des lames rigides, mais peuvent être des matériaux semi-rigides. Selon un premier mode de réalisation illustré aux fig. 1 à 3, l'orientation et la disposition des lames structurelles 2 dans les différents plis 1 forme une structure équivalente à un treillis structurel. Ces lames structurelles peuvent par exemple être aboutées et calibrées, de section rectangulaire et disposées verticalement puis horizontalement un pli sur deux. Les plis croisés sont assemblés entre eux au niveau des lames de bois. Cet assemblage peut se faire par collage, ou encore par clouage ou vissage. A la fig. 3 on voit un pli constitué exclusivement de lames structurelles.

Les plis dont les lames structurelles sont orientées dans le même sens (verticalement ou horizontalement) peuvent présenter un décalage du positionnement des lames structurelles d'un pli sur l'autre. Ce décalage permet de réduire voir d'annihiler les ponts thermiques potentiellement engendrés par le treillis structurel.

Selon un autre mode de réalisation, on peut disposer deux plis successifs avec des lames structurelles parallèles, ou encore inclinées d'un angle quelconque, par exemple de 30°, 45° ou 60° d'un pli sur l'autre.

Les lames structurelles peuvent être en bois, mais aussi en métal, de préférence un métal léger comme l'aluminium, en un matériau composite, comme la fibre de carbone, ou encore en résine.

La résistance mécanique globale du panneau est obtenue par assemblage structurel des lames structurelles entre elles sur toute leur zone de contact : toute la longueur ou aux croisements des lames selon qu'elles sont empilées, ou qu'elles présentent un angle entre elles.

Le décalage (ou entraxe) entre les lames structurelles est fonction des performances mécaniques attendues du pli, et on peut disposer entre les lames structurelles un certain nombre de lames de remplissage, soit de largeur standard, soit d'une largeur adaptée aux contraintes géométriques rencontrées pour le panneau, par exemple la présence de portes ou fenêtres.

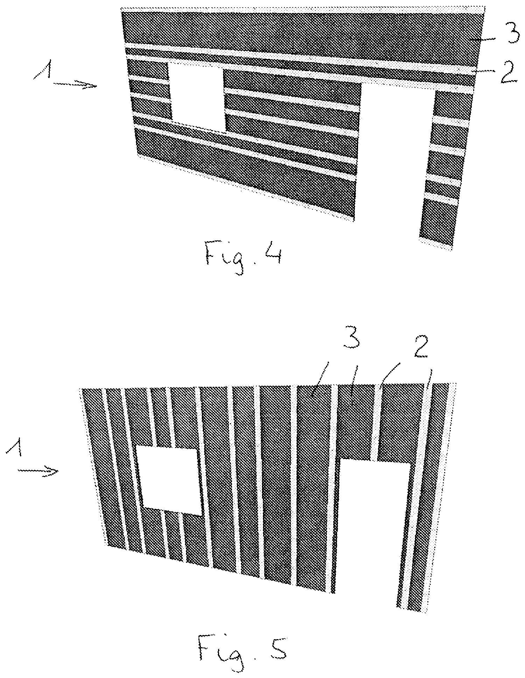

Les fig. 4 et 5 illustrent deux exemples de plis incorporant une porte 5 et une fenêtre 6, avec deux dispositions différentes des lames structurelles. On peut ainsi alterner un pli selon la fig. 4 avec un pli selon la fig. 5, mais on peut aussi disposer plusieurs plis successifs selon la fig. 4, ou intercaler d'autres configurations, comme un pli constitué de lames structurelles. Les lames de remplissage sélectionnées viennent compléter les plis.

Les lames structurelles étant orientées à plat dans un pli, l'épaisseur du pli est donnée par l'épaisseur des lames structurelles retenue. L'épaisseur des lames structurelles peut éventuellement varier d'un pli à l'autre ; ainsi un panneau peut être composé de plis de différentes épaisseurs.

Exemples de dimensions possibles des lames structurelles :
- 30x100 mm,
- 30x150 mm,
- 45x95 mm,
- 45x145 mm.

Exemples de dimensions possibles des lames de remplissage (isolations, inerties ou autre) :
- 150 mm (l'épaisseur étant celle de la lame bois),
- 300 mm (ou 2 lames de 150 mm),
- 450 mm (ou 3 lames de 150 mm ou 1 lame de 150 mm et une lame de 300 mm),
- 600 mm (ou 4 lames de 150 mm ou 2 lames de 300 mm),
- une dimension quelconque, imposée par la disposition géométrique du panneau

Les espaces disponibles entre lames structurelles dans chacun des plis peuvent être comblés par une lame de remplissage d'un matériau adapté ou laissés vide (par exemple pour les plis extérieurs) pour intégrer des réseaux techniques ou pour toute autre utilité.

Au sein d'un pli, les lames de remplissage peuvent être collées à chant entre elles, notamment si plusieurs lames sont associées, et collées aux lames structurelles afin d'obtenir un contact parfait entre matériaux, garant d'une bonne étanchéité à l'air, thermique et acoustique.

Les différents panneaux (murs, dalles, planchers, rampants) doivent remplir une ou plusieurs fonctions au sein d'une construction tout en respectant les exigences réglementaires :

**Tableau 1 : Exigences règlementaires**

| **FONCTIONS** | **EXIGENCES** |
|---|---|
| Structurelle | Eurocodes |
| Thermique | RT2005, RT2012, ... |
| Acoustique | NRA2000 |
| Feu | Eurocodes |

Ainsi, une formulation précise et adaptée à chaque exigence, pour chacun des plis composant un panneau, doit aboutir à une rationalisation de matériaux utilisés. Les composants présents dans les panneaux doivent être en quantité strictement nécessaire et suffisante.

L'analyse de ces différentes formulations a permis d'identifier des "galettes fonctionnelles" 4 (fig. 3) comportant un certain nombre de plis, eux même composés de différents matériaux :
- galette structurelle,
- galette isolante,
- galette inertie,
- galette réseaux techniques et support parements.

NOTA : chacune des galettes fonctionnelles peut présenter des aptitudes minimales pour d'autres fonctions (ex. : la galette structurelle apporte un début de réponse à la fonction isolante).

Les différents exemples présentés ci-dessous sont établis sur une base de plis d'épaisseur 30 mm chacun.

### Exemple 1 - MURS RIDEAUX rapportés sur une structure principale en béton, en métal ou en bois pour un bâtiment neuf ou une réhabilitation.

- Parement intérieur : Plaque de plâtre.
- Contre-cloison acoustique / vide technique : Rail métallique type R48 + isolation acoustique type laine minérale 50 mm :
   ■ R = 1,40 m². K/W
   ■ Rw-17 dB (avec BA13)
- Pare-vapeur : ép >= 150 µ / Sd> 80-100 m
- Panneau de remplissage / rôles thermique et acoustique (panneau selon l'invention):
   ■ 1er pli vertical - 25% bois / 75% laine minérale
   ■ 2ème pli horizontal - 25% bois / laine minérale
   ■ 3ème pli vertical - 25% bois / 75% PSEG
   ■ 4ème pli horizontal - 25% bois / 75% PSEG
   ■ 5ème pli vertical - 25% bois / 75% PSEG
   ■ 6ème pli horizontal - 25% bois / 75% PSEG
   ■ 7ème pli vertical - 25% bois / 75% laine minérale
- Pare-pluie : pare-pluie Sd<0,18 m
- Support parement / lame d'air ventilée : Tasseaux bois massif 30x80 mm (entraxe 600 mm)
- Parement extérieur : panneaux stratifiés

Les performances obtenues avec un tel panneau sont les suivantes :
- Résistance thermique : 4,91 m².K/W
- Conductivité thermique : 0,203 W/m².K, (la RT2012 neuf impose ≤ 0,2 W/m².K)
- Résistance acoustique Rw : 36 dB sans BA13, (la NRA2000 impose ≥ 30 ou 53 dB)
- tance acoustique Rw : 36 dB sans BA13, (la NRA2000 impose ≥ 30 ou 53dB)

### Exemple 2 - MUR PORTEUR MULTI-GALETTES

- Parement intérieur : Plaque de plâtre.
- Support parement / vide technique : Tasseaux bois massif 37x50 mm (entraxe 600 mm)
- Pare-vapeur : ép >= 150 µ / Sd> 80-100 m
- Panneau porteur / rôles thermique, acoustique et structurel (panneau selon l'invention) :
   ∘ Galette structurelle :
      ■ 1er pli vertical - 50% bois / 50% laine minérale
      ■ 2ème pli horizontal - 20% bois / 80% PSEG
      ■ 3ème pli vertical - 50% bois / 50% PSEG
      ■ 4ème pli horizontal - 20% bois / 80% PSEG
      ■ 5ème pli vertical - 50% bois / 50% PSEG
   ∘ Galette isolante :
      ■ 6ème pli horizontal - 20% bois / 80% PSEG
      ■ 7ème pli vertical - 20% bois / 80% PSEG
      ■ 8^{ème} pli horizontal - 25% bois / 75% laine minérale
- Pare-pluie : pare-pluie Sd<0,18 m
- Support parement / lame d'air ventilée : Tasseaux bois massif 27x50 mm (entraxe 600 mm)
- Parement extérieur : bardage bois

Les performances obtenues avec un tel panneau sont les suivantes :
- Résistance thermique : 5,03 m².K/W
- Conductivité thermique : 0,198 W/m².K, (la RT2012 neuf impose ≤ 0,2 W/m².K)
- Résistance acoustique Rw : 40 dB avec BA13, (la NRA2000 impose ≥ 30dB)
- acoustique Rw : 40 dB avec BA13, (la NRA2000 impose ≥ 30 ou 53dB)

### Exemple 3 - MUR PORTEUR MONO-GALETTE

- Parement intérieur : Plaque de plâtre.
- Support parement / vide technique : Tasseaux bois massif 37x50 mm (entraxe 600 mm)
- Panneau porteur / rôles acoustique et structurel (panneau selon l'invention) :
   ■ 1er pli vertical - 50% bois / 50% laine minérale
   ■ 2ème pli horizontal - 20% bois / 80% PSEG
   ■ 3ème pli vertical - 50% bois / 50% PSEG
   ■ 4ème pli horizontal - 20% bois / 80% PSEG
   ■ 5ème pli vertical - 50% bois / 50% laine minérale
- Parement intérieur : Plaque de plâtre

Les performances obtenues avec un tel panneau sont les suivantes :
- Résistance acoustique Rw : 38 dB avec BA13, (la NRA2000 impose ≥ 35dB)

### Exemple 4 - ne fait pas partie de l'invention - PLANCHER

- Revêtement de sol : Parquet flottant.
- Matériau résilient : Assour parquet
- Panneau plancher / rôles acoustique et structurel (panneau ne faisant pas partie de l'invention) :
   ▪ 1er pli longitudinal - 100% bois
   ▪ 2ème pli transversal - 50% bois / 50% laine minérale
   ▪ 3ème pli longitudinal - - 50% bois / 50% laine minérale
   ▪ 4ème pli transversal - - 50% bois / 50% laine minérale
   ▪ 5ème pli longitudinal - 50% bois / 50% laine minérale
   ▪ 6ème pli transversal - - 50% bois / 50% laine minérale
   ▪ 7ème pli longitudinal - 100% bois
- Faux plafond suspendu : Plaque de plâtre sur rail métallique

Les performances obtenues avec un tel panneau sont les suivantes :
- Résistance acoustique Rw = 39 dB avec BA13, (la NRA2000 impose ≥ 40dB)
- Portée = 7 m (sur 2 appuis, sous charges d'exploitations de 150 kg/m² et une flèche de 1/500)

### Exemple 5 - RAMPANT DE TOITURE

- Couverture : Tout type de couverture + lattage et contre lattage.
- Protection / étanchéité : Ecran de sous-toiture type pare-pluie HPV.
- Panneau rampant / rôles thermique, acoustique et structurel (panneau selon l'invention) :
   ∘ Galette structurelle :
      ▪ 1er pli longitudinal - 100% bois
      ▪ 2ème pli transversal - 50% bois / 50% laine minérale
      ▪ 3ème pli longitudinal - 50% bois / 50% laine minérale
      ▪ 4ème pli transversal - 50% bois / 50% PSEG
      ▪ 5ème pli longitudinal - 50% bois / 50% PSEG
      ▪ 6ème pli transversal - 50% bois / 50% PSEG
      ▪ 7ème pli longitudinal - 100% bois
   ∘ Galette isolante :
      ▪ 8ème pli transversal - 20% bois / 80% PSEG
      ▪ 9ème pli longitudinal - 20% bois / 80% PSEG
      ▪ 10ème pli transversal - 20% bois / 80% PSEG
      ▪ 11ème pli longitudinal - 25% bois / 75% laine minérale
- Faux plafond suspendu : Plaque de plâtre sur rail métallique.

Les performances obtenues avec un tel panneau sont les suivantes :
- Résistance thermique : 5,91m².K/W
- Conductivité thermique : 0,17 W/m².K (la RT2012 neuf ≤ 0,17 W/m².K)
- Résistance acoustique Rw = 40 dB (avec BA13), (la NRA2000 impose ≥ 30dB)
- Portée = 7 m (sur 2 appuis, sous charges permanente et climatique de 150 kg/m² et une flèche de 1/500)

Les panneaux peuvent également être utilisés en complément thermique d'une structure existante, comme dans le cas d'opération de rénovation de façades.

Dans ce cas, la performance thermique des plis sera privilégiée et le treillis de lames structurelles sera dimensionné (%lames structurelles dans chaque plis) afin de garantir :
- le maintien mécanique du panneau,
- le transfert d'effort, engendré par le parement extérieur, jusqu'au mur support.

Les matériaux utilisés pour le panneau selon l'invention peuvent être choisis parmi les suivants :
Pour les lames structurelles on peut choisir un bois parmi des Résineux comme l'épicéa, le sapin, le douglas, ou alors un métal léger comme l'aluminium, un matériau composite, des résines. Les lames peuvent être pleines ou creuses.

En fonction des performances thermiques exigées, associés aux contraintes acoustiques, feu et économiques, plusieurs produits isolants ont été sélectionnés. Les isolants sont utilisés sous forme de lames, par exemple de largeur multiple de 150 mm (150, 300, 450 et 600 mm) et d'épaisseurs de 30 et 45 mm :

La laine de verre est utilisée comme isolant thermique et acoustique.

Sa masse volumique est de 70 kg/m3, sa conductivité thermique de 0,030 W/m.K, son coefficient de résistance à la diffusion de vapeur µ de 1,2, et sa chaleur spécifique de 1030 J/(kg.K)

Sa réaction au feu est classée M0, et A2 S1 d0 selon l'Euroclasse NF EN 13501-1. Une telle réaction au feu correspond aux matériaux qu'on peut qualifier d' « ininflammable » selon la norme français, et qui correspond à la classification A2 S1 de l'Euroclasse au moins.

La laine de roche peut être utilisée comme isolant thermique, mais est particulièrement appréciée comme isolant acoustique.

Sa masse volumique est de 100 à 150 kg/m3, sa conductivité thermique de 0,036 à 0,038 W/m.K, son coefficient de résistance à la diffusion de vapeur µ de 1, et sa chaleur spécifique de 1030 J/(kg.K)

Sa réaction au feu est classée Incombustible, et A1 selon l'Euroclasse NF EN 13501-1., il est donc à fortiori ininflammable.

Le polystyrène expansé graphité (PSEG) est utilisée comme isolant thermique. Il est constitué de pentane (mélange isomères mixtes) et de 98% d'air emprisonné. Des isolants de type ouate de cellulose conviennent également.

La masse volumique du PSEG est de 20 kg/m3, sa conductivité thermique de 0,031 à 0,032 W/m.K, son coefficient de résistance à la diffusion de vapeur µ de 60, et sa chaleur spécifique de 1450 J/(kg.K)

Sa réaction au feu est classée M4, et E selon l'Euroclasse NF EN 13501-1, ou M1 pour un polystyrène expansé (PSE) ignifugé.

La fibre de bois peut être utilisée comme isolant thermique et acoustique quoique ses performances d'isolation thermique soient un peu moins bonnes. Elle présente une bonne inertie (confort été / hiver), et elle est constituée de 98% fibres de bois (feutrage de fibres de bois résineux), et de paraffine (ou polyoléfine)

Sa masse volumique varie de 80 kg/m3 à 150 kg/m3, sa conductivité thermique de 0,039 à 0,042 W/m.K, son coefficient de résistance à la diffusion de vapeur µ de 5, et sa chaleur spécifique de 2100 J/(kg.K)

Sa réaction au feu est classée M4, et E selon l'Euroclasse NF EN 13501-1.

Il existe des matériaux désignés par « laines de bois », de densité inférieure à 80 kg/m3.

Par ailleurs, les performances thermiques d'un bâtiment sont étroitement liées à l'inertie globale présente dans ce dernier. Cette inertie contribue à l'amélioration du "confort été / hiver" ; ainsi des matériaux apportant cette fonction peuvent être intégrés dans les plis intérieurs des panneaux selon l'invention. Ces matériaux de remplissage permettent aussi d'améliorer les performances acoustiques et, selon leur nature, contribuer au degré coupe-feu et à la stabilité au feu des panneaux. Parmi ces matériaux, on peut trouver le plâtre (gypse naturel), de l'ouate de cellulose (recyclage de papier) ou des particules de bois, utilisés par exemple en épaisseur 15 mm.

La masse volumique du plâtre est de 1250 kg/m³, sa conductivité thermique de 0,320 W/m.K, son coefficient de résistance à la diffusion de vapeur µ de 13, et sa chaleur spécifique de 1265 J/(kg.K) ; il permet d'obtenir un affaiblissement acoustique de 31 dB(A).

En combinant la chaleur spécifique et la masse volumique, on obtient une inertie thermique volumique d'environ 1500 kJ/m³.K, ce qui, pour une lame de 30 mm d'épaisseur donne une inertie thermique de 45 kJ/m².K ; les matières très isolantes comme celles décrites plus haut présentent souvent une inertie thermique bien plus faible, et il peut donc être intéressant pour un panneau de combiner plusieurs plis isolants, constituant une galette isolante, et plusieurs plis à grande inertie, constituant une galette d'inertie. Le bois présentant une inertie thermique volumique de l'ordre de 1000 kJ/m3.K, peu inférieure à celle du plâtre, on pourra préférer un pli 100% bois, un peu moins efficace pour l'inertie, mais qui apporte aussi une bonne résistance structurelle.

La réaction au feu du plâtre est classée M0, et A2 s1 d0 selon l'Euroclasse NF EN 13501-1, ce matériau peut donc aussi être qualifié d'incombustible, et à fortiori d'ininflammable.

L'étanchéité à la vapeur d'eau est obtenue par la mise en œuvre d'un film pare-vapeur sur la face intérieure des panneaux. Le jointement des lés et les raccordements avec les menuiseries sont assurés par des lames adhésives adaptées.

Les produits ont une perméance maximale de 0,005 g/m². mm Hg, et une épaisseur minimale de 100 µm, conformes au DTU 31.2

En fonction des "résistances à la diffusion de vapeur d'eau" propres à chaque produit de remplissage (isolation et inertie) composant un panneau selon l'invention et suivant les résultats du calcul des courbes de pression de vapeur d'eau, la suppression du pare-vapeur peut être envisagée.

Concernant la protection contre la pluie, selon la classification de la paroi verticale (DTU 20.1) et en fonction de la nature du parement extérieur rapporté sur les panneaux selon l'invention, une étanchéité à l'eau indépendante du revêtement extérieur peut être nécessaire. Un film pare-pluie peut assurer l'étanchéité à l'eau du bâtiment.

Les produits ont une perméance maximale de 0,5 g/m². mm Hg conforme au DTU 31.2.

Les parements extérieurs rapportés sur les murs selon l'invention sont dissociés en deux familles :
- parements, type lame ou plaque, fixés sur une ossature secondaire intégrant une lame d'air ventilée,
- revêtements appliqués directement sur les panneaux.

Dans le premier cas, l'étanchéité à l'eau est assurée par un pare-pluie positionné au niveau de la lame d'air ventilée.

Les parements extérieurs sont fixés sur un support discontinu de type ossature bois secondaire. L'entraxe et la section des éléments d'ossature sont fonction du type de matériaux rapportés sur la façade (conforme aux prescriptions des DTU ou Avis techniques des fabricants).

Exemples de parements extérieurs pouvant être associés aux murs selon l'invention :
- Bardages en lames de bois massif (DTU 41.2),
- Bardages en lames de matériaux de synthèse,
- Bardages en panneaux métalliques,
- Panneaux stratifiés décoratifs haute pression,
- Bardages écailles bois type bardeaux,
- Bardages écailles en terre cuite,
- Revêtements muraux attachés en pierre mince,

Les revêtements de type enduits associés à une armature en fibres pourront être rapportés sur le dernier pli 100% isolant des panneaux selon l'invention. En fonction des recommandations des systèmes d'enduit extérieur existants, l'isolation support serait en fibre de bois (60 mm mini), laine de roche (40 mm mini), ou polystyrène expansé (30 mm mini).

L'avantage apporté par la présente invention réside principalement en ce qu'elle permet de proposer des panneaux ayant les propriétés recherchées pour une pluralité d'applications, à partir d'un petit nombre de composants élémentaires que sont les lames structurelles et les lames de remplissage tout en obtenant d'excellentes propriétés.

Bien que l'invention ait été décrite selon un mode de réalisation particulier, elle n'y est nullement limitée, et des variantes peuvent y être apportées, ainsi que des combinaisons des variantes décrites, sans pour autant sortir du cadre de la présente invention telle que définie par les revendications.

## Revendications

1. Panneau multi-plis pour la constitution ou le complément d'un mur, d'un plancher ou plafond, ou d'un rampant pour un bâtiment, constitué d'un empilement de plis (1) comportant chacun des lames structurelles, de préférence en bois, au moins deux desdits plis étant constitués de lames structurelles (2) parallèles, et de lames de remplissage (3) disposées entre les lames structurelles (2) en un matériau différent que celui des lames structurelles (2), lesdits matériaux pouvant être sélectionnés pour leur isolation thermique ou acoustique, leur inertie thermique ou leur résistance au feu, au moins une première lame de remplissage (3) de l'un des deux dits plis (1) est rigide, **caractérisé en ce que** cette au moins première lame de remplissage (3) est en un matériau isolant de conductivité thermique inférieure à 0,038 W/m.K, de préférence inférieure à 0,035 W/m.K, et qu'au moins une lame de remplissage (3) de l'autre des deux dits plis (1) est en un matériau rigide ou semi-rigide différent dudit premier matériau.

2. Panneau selon la revendication précédente, dans lequel ledit matériau isolant est en laine de verre, laine de roche ou en polystyrène expansé blanc ou graphité.

3. Panneau selon l'une des revendications précédentes, comprenant une lame de remplissage (3) en un matériau d'inertie présentant une inertie thermique supérieure à 1000 kJ/m³.K.

4. Panneau selon la revendication précédente, dans lequel ledit matériau d'inertie est en bois, plâtre, ouate de cellulose, ou particules de bois.

5. Panneau selon l'une des revendications précédentes, comprenant une lame de remplissage (3) en un matériau isolant acoustique.

6. Panneau selon la revendication précédente, dans lequel ledit matériau isolant acoustique est en laine de roche ou fibres de bois.

7. Panneau selon l'une des revendications précédentes, comprenant une lame de remplissage (3) en un matériau incombustible.

8. Panneau selon la revendication précédente, dans lequel ledit matériau incombustible est en plâtre ou laine de roche.

9. Panneau selon l'une des revendications précédentes, comprenant un pli (1) pour réseaux techniques, dans laquelle subsistent des espaces entre les lames structurelles (2) de sorte à permettre le passage de réseaux techniques.

## Patentansprüche

1. Mehrlagige Platte zum Aufbau oder zur Ergänzung einer Wand, eines Bodens oder einer Decke oder einer Schräge für ein Gebäude, bestehend aus einem Stapel von Lagen (1), die jeweils Strukturblätter, vorzugsweise aus Holz, umfassen, wobei mindestens zwei dieser Lagen aus parallel verlaufenden Strukturblättern (2) und zwischen den Strukturblättern (2) angeordneten Füllblättern (3) aus einem anderen Material als dem der Strukturblätter (2) bestehen, wobei die Materialien gegebenenfalls nach ihrer Wärme- oder Schalldämmung, thermischen Trägheit oder Feuerbeständigkeit ausgewählt werden, wobei mindestens eine erste Füllblatt (3) einer der beiden Lagen (1) starr ist, **dadurch gekennzeichnet, dass** dieses mindestens erste Füllblatt (3) aus einem Isoliermaterial mit einer thermischen Leitfähigkeit von weniger als 0,038 W/mK, vorzugsweise weniger als 0,035 W/mK besteht, und dass mindestens ein Füllblatt (3) auf der anderen der beiden Lagen (1) aus einem starren oder halbstarren Material besteht, das sich von dem ersten Material unterscheidet.

2. Platte nach dem vorhergehenden Anspruch, wobei das Isoliermaterial Glaswolle, Steinwolle oder weißes expandiertes Polystyrol oder expandiertes Polystyrol mit Graphit ist.

3. Platte nach einem der vorhergehenden Ansprüche, umfassend ein Füllblatt (3) aus einem Trägheitsmaterial mit einer thermischen Trägheit von mehr als 1000 kJ/m³.K.

4. Platte nach dem vorhergehenden Anspruch, wobei das Trägheitsmaterial Holz, Gips, Zellulosewatte oder Holzspäne ist.

5. Platte nach einem der vorhergehenden Ansprüche, umfassend ein Füllblatt (3) aus einem schalldämmenden Material.

6. Platte nach dem vorhergehenden Anspruch, wobei das schalldämmende Material Steinwolle oder Holzfasern ist.

7. Platte nach einem der vorhergehenden Ansprüche, umfassend ein Füllblatt (3) aus einem nicht brennbaren Material.

8. Platte nach dem vorhergehenden Anspruch, wobei das nicht brennbare Material Gips oder Steinwolle ist.

9. Platte nach einem der vorhergehenden Ansprüche, umfassend eine Lage (1) für technische Netze, wobei Zwischenräume zwischen den Strukturblättern (2) verbleiben, um den Durchgang von technischen Netzen zu ermöglichen.

## Claims

1. Multi-layer panel for forming or adding to a wall, floor or ceiling, or ramp for a building, comprising a stack of layers (1) each having structural slats, preferably made of wood, at least two of said layers being composed of parallel structural slats (2) and filling slats (3) which are arranged between the structural slats (2) and made of a different material from that of the structural slats (2), it being possible for said materials to be selected for their heat or sound insulation, thermal inertia or fire resistance, at least one first filling slat (3) of one of two such layers (1) being rigid, **characterized in that** said at least one first filling slat (3) is made of an insulating material having a thermal conductivity of less than 0.038 W/m.K, preferably less than 0.035 W/m.K, and **in that** at least one filling slat (3) of the other of two such layers (1) is made of a rigid or semi-rigid material that is different from the first material.

2. Panel according to the preceding claim, wherein said insulating material is made of glass wool, rock wool, or white or graphitized expanded polystyrene.

3. Panel according to either of the preceding claims, comprising a filling slat (3) made of an inertial material having a thermal inertia greater than 1000 kJ/m³.K.

4. Panel according to the preceding claim, wherein said inertial material is made of wood, plaster, cellulose insulation, or wood particles.

5. Panel according to any of the preceding claims, comprising a filling slat (3) made of a sound insulating material.

6. Panel according to the preceding claim, wherein said sound insulating material is made of rock wool or wood fibers.

7. Panel according to any of the preceding claims, comprising a filling slat (3) made of an incombustible material.

8. Panel according to the preceding claim, wherein said incombustible material is made of plaster or rock wool.

9. Panel according to any of the preceding claims, comprising a layer (1) for technical networks, wherein spaces are left between the structural slats (2) so as to allow technical networks to pass therethrough.
